(19)

Europäisches
Patentamt
European
Patent Office
Office européen
des brevets

(11) **EP 3 531 092 A1**

(12) **EUROPEAN PATENT APPLICATION**

(43) Date of publication:
**28.08.2019   Bulletin 2019/35**

(51) Int Cl.:
***G01J 3/46*** (2006.01)          ***G06T 7/10*** (2017.01)
***G01J 3/12*** (2006.01)

(21) Application number: **18305204.2**

(22) Date of filing: **27.02.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(71) Applicant: **InterDigital CE Patent Holdings
75017 Paris (FR)**

(72) Inventors:
• **REINHARD, Erik
35576 CESSON-SÉVIGNÉ (FR)**
• **PUY, Gilles
35576 CESSON-SÉVIGNÉ (FR)**
• **LOPEZ, Patrick
35576 CESSON-SÉVIGNÉ (FR)**

(74) Representative: **Browaeys, Jean-Philippe et al
InterDigital CE Patent Holdings
20, rue Rouget de Lisle
92130 Issy-les-Moulineaux (FR)**

(54) **IMAGE CAPTURE DEVICE AND METHOD FOR DETECTING A MATERIAL IN AREAS OF A SCENE**

(57)     As in usual camera architectures, the different color channels of the device are defined according to the spectral transmittances characterizing the different color filter elements of an array (CFA) - in case of a usual single-sensor architecture - or characterizing the filtration brought by a beam splitter, resulting in different imaging beams - in case of a usual multi-sensor architecture. According to the invention, the different spectral transmittances meet at least two requirements notably based on the spectral reflectance of a material to detect such that when all color values of a pixel of a captured image are approximately equal, this material is considered as detected on the corresponding area of the scene. USES : skin detection and gesture recognition by a camera having limited processing resources, therefore notably in portable devices and in cameras of TVs and game monitors.

**EP 3 531 092 A1**

**Description**

Technical Field

In an image capture device, the invention relates to the replacement of computer processing of multispectral data for the detection of material in a scene by an optical filter processing.

Background Art

For the detection of specific materials in a scene, it is well known to rely on specific spectral reflectance of these materials.

US20170089761 discloses using a spectral imaging system to detect the presence, location, and/or quantity of a target substance in a scene. A multispectral camera or an array of cameras having each a specific spectral range of capture may notably be used for this purpose. US20170303790 discloses notably a plurality of cameras configured to capture images of skin regions of a scene in distinct spectral bands in order to identify regions of interest (ROIs) from the skin regions and to analyse the ROIs for a particular skin trait, as, for instance, the presence of cosmetics.

When using multispectral cameras for this purpose, a specific array of color filter elements may be used in front of the light sensor of this camera, each color filter being dedicated to pass a specific spectral range. US20170089761 (see [0018]) discloses methods to select the different filter elements that are used in an array to allow the system to detect a target substance of interest. Such a selection allows advantageously to reduce the amount of spectral information used to make an identification of a target substance. By reducing the acquisition and analysis data to pre-selected, finite spectral features, great improvements in device size, cost, power consumption, resolution, and processing speed are realized.

But, in all detection systems based on spectral analysis and even when using an array of selected filters, a specific computer processing of the different spectral responses of light sensor(s) of the camera(s) is necessary for the detection of a specific material in a scene. Moreover, as each sensor is dedicated to a specific spectral range, and as the different spectral ranges do not generally overlap, the light sensitivity of the detection system may become poor.

Summary of invention

As in usual camera architectures, the different color channels of the image capture device according to the invention are defined according to the spectral transmittances characterizing the different color filter elements of an array (CFA) - in case of a usual single-sensor architecture - or characterizing the filtration brought by a beam splitter, resulting in different imaging beams - in case of a usual multi-sensor architecture. According to the invention, the different spectral transmittances meet at least two requirements notably based on the spectral reflectance of a material to detect such that when all color values of a pixel of a captured image are approximately equal, this material is considered as detected on the corresponding area of the scene.

Use of the invention concerns skin detection and gesture recognition by a camera having limited processing resources, therefore notably in portable devices and in cameras of TVs and game monitors.

In case of a usual single-sensor architecture, an object of the invention is to avoid the aforementioned drawbacks by proposing notably to replace or to complement the standard red, green and blue filters of the Color Filter Array (CFA) of a usual single-sensor-unit camera by a CFA designed to optimally detect directly at least one material, for instance human skin, without computer processing of spectral data as in a multispectral camera. The two or more filters of this specific CFA should preferably cover different parts of the spectrum, and preferably partially overlap, therefore allowing improved sensitivity. They preferably exhibit peaks in different parts of the spectrum to enable a response specific to the material to detect.

Such an object of the invention does not only concern single-sensor-unit camera but also multi-sensor-unit cameras having a beam splitter instead of a CFA.

More precisely, the subject of the invention is a device for capturing a pixelated image of a scene illuminated under a spectral illumination $I(\lambda)$, comprising:

- at least one array of light sensor elements distributed over a pixelated active surface, each light sensor element being configured to output a color value representative of its irradiance $E_i$,
- an optical unit configured to image said illuminated scene on the pixelated active surface of each of the at least one array of light sensor elements and to filter the irradiance of each light sensor element through a spectral transmittance $r_i(\lambda)$ defining one i of a plurality of at least $n \geq 2$ color channels for each pixel of said pixelated image,
- a processing unit configured to obtain, for each pixel of said pixelated image and for each color channel i of said plurality of n color channels, a color value output by at least one a light sensor element on which said pixel is imaged, thereby providing said pixelated image,

wherein the spectral transmittance $r_i(\lambda)$ defining each color channel i meets at least the following two conditions:

$$\int_{\lambda=\lambda_{min}}^{\lambda=\lambda_{max}} r_i(\lambda)\, l(\lambda)\, d\lambda \approx \frac{1}{n} \int_{\lambda=\lambda_{min}}^{\lambda=\lambda_{max}} \frac{1}{a(\lambda)} d\lambda \qquad \forall i \in [1,n]$$

and

$$\sum_{i=1}^{n} r_i(\lambda)\, l(\lambda) \approx \frac{1}{a(\lambda)} \qquad \forall\, \lambda \in [\lambda_{min}, \lambda_{max}]$$

wherein the spectral transmittances $r_1(\lambda)$, $r_2(\lambda)$,..., $r_i(\lambda)$,..., $r_n(\lambda)$ of the n color channels are different, one from any other one,

where $a(\lambda)$ is the spectral reflectance of a specific material a in a detection spectral range $[\lambda_{min},\ \lambda_{max}]$,

where said spectral illumination $l(\lambda)$ and said spectral transmittances $r_i(\lambda)$ $i \in [1,n]$ are defined at least in said detection spectral range $[\lambda_{min},\ \lambda_{max}]$.

The detection spectral range $[\lambda_{min},\ \lambda_{max}]$ may include visible wavelengths and/or IR or UV wavelengths.

Preferably, the different spectral transmittances $r_1(\lambda)$, $r_2(\lambda)$,..., $r_i(\lambda)$,..., $r_n(\lambda)$ of the n color channels overlap at least partially over said spectral range $[\lambda_{min},\ \lambda_{max}]$, contrary to multispectral image capture devices such as those disclosed in US20170089761 and US20170303790 quoted above. Such a partial overlap means that, for any two spectral transmittances $r_i(\lambda)$, $r_j(\lambda)$ of the n color channels, there is a range of wavelengths (included in or equal to the spectral range $[\lambda_{min},\ \lambda_{max}]$) in which we have simultaneously $r_i(\lambda) \gg 0$ and $r_j(\lambda) \gg 0$.

Preferably, said processing unit is further configured to detect in the pixelated image of the scene pixels having approximately equal color values over the n color channels. Detected pixels then correspond to areas of the scene covered with the material having the spectral reflectance $a(\lambda)$.

Preferably, said material is human skin and wherein said spectral reflectance $a(\lambda)$ is described by a spectral curve characterized by:

- A broad peak centered around 520 nm
- A broad dip between 540 and 580 nm
- A narrow peak at 555 nm
- A sharp rise between 580 and 620 nm
- A plateau between 620 and 700 nm, which is about twice as high as the peak around 520 nm.

In a first variant, the device has a single-sensor-unit camera architecture. In this variant, the device comprises only one array of light sensor elements, wherein said optical unit comprises an array of color filter elements configured such that each light sensor element i has a color filter element on it having the spectral transmittance $r_i(\lambda)$ defining one of said color channels. In this variant, the processing unit is preferably further configured to demosaic the pixels of the single pixelated active surface.

In a second variant, the device has a multi-sensor-unit camera architecture. In this variant, the device comprises one array of light sensor elements for each color channel, wherein said optical unit comprises an illumination beam splitter configured to split a main imaging beam into n different filtered imaging beams directed to the pixelated active surface of an array of light sensor element such that each filtered imaging beam results from the filtering of the main imaging beam through a spectral transmittance $r_i(\lambda)$ defining a color channel $i$. In this variant, a specific color image is formed on the pixelated active surface of each array of light sensor elements and the combination of all these specific color images forms the pixelated image of the scene. The illumination beam splitter is built in a manner known per se using notably a set of color filters and/or dichroic mirrors.

An object of the invention is also a method for capturing a pixelated image of a scene using the above device.

An object of the invention is also a method for detecting in a scene a material a having a spectral reflectance $a(\lambda)$ in a detection spectral range $[\lambda_{min},\ \lambda_{max}]$, comprising capturing a pixelated image of this scene according to this method, and detecting in the captured pixelated image pixels having approximately equal color values over the n color channels.

An object of the invention is also a method of gesture recognition in a scene illuminated under a spectral illumination $I(\lambda)$ comprising capturing a pixelated image of said scene according to this method, wherein said specific material is human skin, further comprising detecting in the pixelated image of the scene pixels having approximately equal color values over the n color channels and recognizing gesture based on detected pixels.

Brief description of drawings

The invention will be more clearly understood on reading the description which follows, given by way of non-limiting examples and with reference to the appended figure:

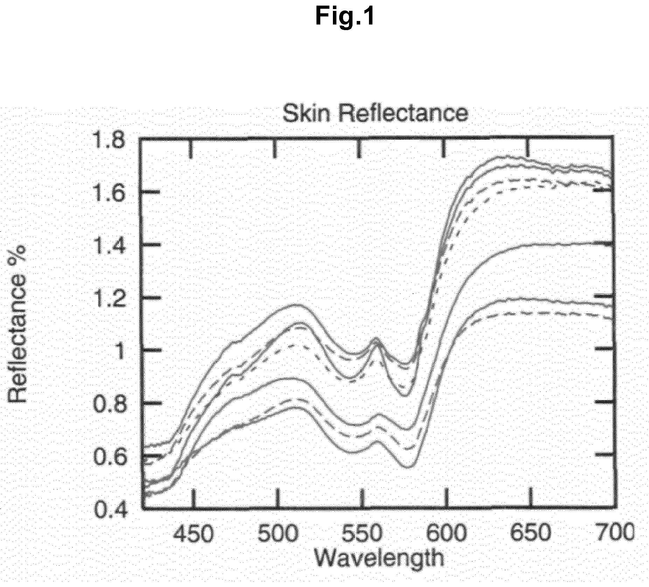

- Figure 1 illustrates the spectral reflectance of human skin of the palm of a hand in the spectral range [*430 nm, 700 nm*] for different ethnicities, as a preferred example of material to detect using the device and the method according to the invention, characterized by, whatever is the ethnicity:

    1. A broad peak centered around 520 nm
    2. A broad dip between 540 and 580 nm
    3. A narrow peak at 555 nm
    4. A sharp rise between 580 and 620 nm
    5. A plateau between 620 and 700 nm, which is about twice as high as the peak around 520 nm.

Description of embodiments

According to a **first main embodiment,** a device for capturing a pixelated image of a scene illuminated under a spectral illumination $I(\lambda)$ comprises an array of light sensor elements distributed over a pixelated active surface, an array of color filter elements configured such that each light sensor element has a color filter element on it, an imaging lens configured to image a scene on this active pixelated surface, and a processing unit configured to process color data provided by the light sensor elements.

Any imaging means different from a lens can be used instead, as mirrors, array of microlenses, or equivalent imaging means. The array of color filter elements and the array of color filter elements composes an optical unit.

Each light sensor element is configured in a manner known per se to output a color value proportional to its irradiance. This color value can be for instance in the range [0, 1] or in a digital range, for instance [0, 255]. Color filters element are preferably distributed over the active pixelated surface according to a specific pattern, such as a Bayer pattern. Such an array of color filter elements is currently named "Color Filter Array" ("CFA"). In the array of color filter elements, at least n ≥ 2 different color filters elements are dedicated to each pixel of the image to capture, each filter element having a specific spectral transmittance $r_i(\lambda)$ defining a specific color channel *i*. The color filter elements are distributed on the array with their corresponding light sensor elements into groups of adjacent color filter elements having different spectral transmittances $r_1(\lambda)$, $r_2(\lambda)$,..., $r_i(\lambda)$,..., $r_n(\lambda)$. Then, color values output by the different light sensor elements of a same group are preferably processed by the processing unit according to a known demosaicing method to obtain the color of a corresponding pixel of the pixelated image of the scene over the n different color channels. In other words, any color of a pixel of the pixelated image of the scene is defined as an n-tuple of n color values, wherein each of these n color values is output by a different light sensor element of a given group of different color filter elements. According to the invention, color filter elements of any of such groups are designed to detect a specific material in the scene such that, when irradiances of the different corresponding light sensor elements of this group are approximately equal, it will mean that this material is actually detected on an area of the scene imaged on the portion of the pixelated active surface corresponding to these light sensor elements. The specification of the spectral transmittances of the different color filter elements that will provide such a technical result will be further detailed.

As already stated above, the configuration of the CFA may take the form of a Bayer pattern, or more elaborate designs may be constructed. An overview of common CFA designs is given in https://en.wikipedia.org/wiki/Color filter array. The choice of demosaicing method depends notably on the configuration of the CFA pattern. As such, any standard CFA design and corresponding demosaicing method may be used.

If the color spectral transmittance of a color filter element i is indicated as a function of wavelength with $r_i(\lambda)$ in a spectral range of detection [$\lambda_{min}$, $\lambda_{max}$] of the material, and if a light spectral signal $s(\lambda)$ is incident upon the color filter element i before hitting its corresponding light sensor element, then the irradiance $E_i$ of this light sensor element will be:

$$E_i = \int_{\lambda=\lambda_{min}}^{\lambda=\lambda_{max}} r_i(\lambda) \, s(\lambda) \, d\lambda$$

The spectral range of detection $[\lambda_{min}, \lambda_{max}]$ may incluse visible wavelengths and/or IR or UV wavelengths, depending on the specificity of the reflectance of the material to detect. Such spectral range of detection $[\lambda_{min}, \lambda_{max}]$ of material are well known in the art.

The light spectral signal $s(\lambda)$ incident upon a color filter element i is then the product of this spectral illumination $l(\lambda)$ of the scene and of the specific reflectance $a_0(\lambda)$ of the material of the area of the scene imaged through the imaging lens on the corresponding light sensor element, so that the above equation becomes:

$$E_i = \int_{\lambda=\lambda_{min}}^{\lambda=\lambda_{max}} r_i(\lambda) \, l(\lambda) \, a_0(\lambda) \, d\lambda$$

It means that the irradiance of the light sensor element i is filtered through the spectral transmittance $r_i(\lambda)$.

It may be assumed that a standard illuminant having its specific spectral illumination $l(\lambda)$, such as for example a D50 or a D65 light source, illuminates the scene, i.e. all materials at the surface of the scene, including the material to detect in specific areas of the scene. For an indoor use case, a different illumination may be assumed, as, for example:

- Soft white: 2700 - 3000 Kelvin
- Bright white / cool white: 3500 - 4100 Kelvin
- Daylight: 5000 - 6500 Kelvin (i.e. D50 - D65)

Soft white would be most likely encountered in living rooms, whereas bright/cool white is more likely used in kitchens and bathrooms.

For $n$ different color filter elements $i$ of a same group corresponding to a pixel of the pixelated image to capture, the combined irradiance E of the corresponding n light sensor elements is then:

$$E = \sum_{i=1}^{n} \int_{\lambda=\lambda_{min}}^{\lambda=\lambda_{max}} r_i(\lambda) \, l(\lambda) \, a_0(\lambda) \, d\lambda$$

According to the invention, the $n$ different color filter elements $i$ of a same group are configured as detailed below such that a detection of a material a having a spectral reflectance $a(\lambda)$ over the spectral range of detection $[\lambda_{min}, \lambda_{max}]$ will occur when the irradiance $E_i$ of each of the n light sensor elements of a same group will be approximately equal, i.e. when $E_1 \approx E_2 \approx \cdots \approx E_i \approx \cdots \approx E_n$, i.e. when the n color values output by the n different light sensor elements of this group are approximatively equal. The processing unit is preferably configured in a manner known per se to detect pixels of the pixelated image having approximately equal color values for all the n color channels.

Assuming again that the illuminant $l(\lambda)$ is sufficiently representative of typical illumination conditions encountered in the targeted use case, as $E_1 \approx E_2 \approx ... \approx E_i \approx ... \approx E_n$, we have:

$$\int_{\lambda=\lambda_{min}}^{\lambda=\lambda_{max}} \sum_{i=1}^{n} r_i(\lambda) \, l(\lambda) \, d\lambda \approx \int_{\lambda=\lambda_{min}}^{\lambda=\lambda_{max}} \frac{1}{a(\lambda)} \, d\lambda$$

where $a(\lambda)$ is the reflectance of the material to detect (for instance, human skin).

On the opposite, once color filter elements are designed for a material a, then typically a different material $b \neq a$ having a different spectral reflectance $b(\lambda)$ will cause this equation to no longer be true, i.e.:

$$\int_{\lambda=\lambda_{min}}^{\lambda=\lambda_{max}} \sum_{i=1}^{n} r_i(\lambda)\, l(\lambda)\, d\lambda \neq \int_{\lambda=\lambda_{min}}^{\lambda=\lambda_{max}} \frac{1}{b(\lambda)}\, d\lambda$$

To be able to detect the material a based on the above conditions, it is proposed to define the $n$ different color filter elements $i$ of any group according to the two following requirements concerning their spectral transmittance $r_i(\lambda)$ :

$$\int_{\lambda=\lambda_{min}}^{\lambda=\lambda_{max}} r_i(\lambda)\, l(\lambda)\, d\lambda \approx \frac{1}{n} \int_{\lambda=\lambda_{min}}^{\lambda=\lambda_{max}} \frac{1}{a(\lambda)}\, d\lambda \qquad \forall i$$

and

$$\sum_{i=1}^{n} r_i(\lambda)\, l(\lambda) \approx \frac{1}{a(\lambda)} \qquad \forall\, \lambda \in [380, 780]$$

Note that, given the constraints (notably in the chemistry) of optical design of the color filter elements, the actual spectral transmission of the color filter elements will generally only approximate these two requirements.

A consequence of these requirements (when applied to equation $E_i = \cdots$ above) is that the peak responses of the different color filter elements are preferably positioned at different wavelengths and that for areas of the scene that depict the material a to detect, irradiances $E_1$, $E_2$,..., $E_i$, ..., $E_n$ of the different light sensor elements of a same group on which these areas are imaged through their $n$ color filter elements will all be approximately equal, i.e.:

$$E_1 \approx E_2 \approx \cdots \approx E_i \approx \cdots \approx E_n$$

Thus, detecting this material a in areas of a scene will become a matter of determining, preferably through the processing unit, for which pixels of the pixelated image obtained by the image capture device the n color values are approximately equal over the n color channels. The more color filter elements are used for each group, i.e. the more color channels in the pixelated image, the more accurate this detection can be made. However, a minimum of two different color filter elements in each group is required. If the n color values output by the n light sensor elements of a same group corresponding to a same pixel of the pixelated image are not exactly equal although this pixel actually images an area of the material to detect in the scene, but are only approximately equal, this may be due also to variations in illumination $l(\lambda)$. On the opposite, if these n color values are strongly different, then the imaged area does not depict the material to detect.

Preferably, in order to improve the detection sensitivity, the spectral transmittivities $r_1(\lambda)$, $r_2(\lambda)$,..., $r_i(\lambda)$,..., $r_n(\lambda)$ of the different color filter elements 1, 2, ..., i, ..., n of each group overlap partially, and even significantly. Such a partial overlap means that, for any two spectral transmittances $r_i(\lambda)$ $r_j(\lambda)$ of the n color channels, there is a significant range of wavelengths (included in or equal to the spectral range [$\lambda_{min}$, $\lambda_{max}$]) in which we have simultaneously $r_i(\lambda) \gg 0$ and $r_j(\lambda) \gg 0$, with $i,j \in [1,n]$ and $i \neq j$.

Preferably, the image capture device is used to detect human skin, notably in the palm of a hand, in areas of a scene imaged by the device. Preferably, the spectral reflectance $a(\lambda)$ over a detection spectral range [430 nm, 700 nm] is characterized, as illustrated on figure 1, by a spectral curve having:

- A broad peak centered around 520 nm
- A broad dip between 540 and 580 nm
- A narrow peak at 555 nm
- A sharp rise between 580 and 620 nm
- A plateau between 620 and 700 nm, which is about twice as high as the peak around 520 nm.

Figure 1 is disclosed in 1999 by Angelopoulou, E., in an article entitled "The reflectance spectrum of human skin, s.1.: University of Pensylvania.

It turns out that the palm of the hand has a much more consistent spectral reflectance than skin of other parts of the human body. While figure 1 shows that the total amount reflected varies across a plurality of ethnicities, the shape of the spectrum is very nearly the same for these ethnicities.

Optionally, in complement to the n different color filter elements in each group corresponding to a same pixel of the pixelated image, each group comprises also usual R,G,B color filter elements and corresponding light sensor elements in order to get not only an image that allow to detect a specific material in the scene as described above, but also a usual RGB image of this scene.

Optionally, on the active pixelated surface, further groups of RGB color filter elements and corresponding light sensor elements are added and regularly distributed between the groups dedicated to the detection of a material as described above. This option allows also the image capture device to provide a usual RGB image of the scene, in complement to the detection of a specific material.

Optionally, in complement to the n different color filter elements dedicated to the detection of a material a in each group corresponding to a same pixel of the pixelated image, each group comprises another set of n' different color filter elements dedicated to the detection of a material b, the spectral transmittivities of which are defined similarly as described above for material a, based on a spectral reflectance $b(\lambda)$ specific to this material. This variant allows a single image capture device to detect a plurality of different materials in areas of a scene captured by this device.

Optional variants above are preferably combined.

As the palm of the hand is a very good target for gesture recognition, a preferred application of the image capture device of the invention is gesture recognition. For this application, the processing unit is preferably further configured to recognize gesture based on detected pixels corresponding to an area of a material being the palm of the hand.

According to a **second main embodiment,** but still in reference to the first embodiment above, a device for capturing a pixelated image of a scene illuminated under a spectral illumination $I(\lambda)$ comprises n arrays of light sensor elements (i.e. one array of light sensor elements for each color channel) having each a pixelated active surface, an imaging lens forming a main imaging beam and configured, together with a beam splitter, to image the scene on the pixelated active surface of the different arrays of light sensor elements, and a processing unit. The beam splitter is configured in a manner known per se to split a main imaging beam into n different filtered imaging beams directed to the pixelated active surface of an array of light sensor element such that each filtered imaging beam results from the filtering of the main imaging beam through a spectral transmittance $r_i(\lambda)$ defining a color channel i. Such an optical scheme corresponds to the usual scheme of a multi-sensor-unit camera.

The imaging lens and the beam splitter are parts of a so-called optical unit. The illumination beam splitter is built in a manner known per se using notably a set of color filters and/or dichroic mirrors chosen to filter the main imaging beam by the different spectral transmittances $r_1(\lambda)$, $r_2(\lambda)$,..., $r_i(\lambda)$,..., $r_n(\lambda)$ defining the different color channels 1, 2, ..., i, ..., n.

In this embodiment, a specific color image is formed on the pixelated active surface of each array of light sensor elements. The processing unit is configured in a manner known per se to combine all these specific color images to form the pixelated image of the scene, such that, as in the first embodiment, for each pixel of the pixelated image and for each color channel i, a color value is obtained.

According to the invention, the spectral transmittances $r_1(\lambda)$, $r_2(\lambda)$,..., $r_i(\lambda)$,..., $r_n(\lambda)$ defining the different color channels 1, 2, ..., $i$, ..., n meets approximately at least the same two requirements as for the first embodiment, allowing the image capture device to detect areas of the scene covered by a material having a specific spectral reflectance $a(\lambda)$ when colors values irradiances $E_1$, $E_2$,...,$E_i$...,$E_n$ of a pixel corresponding to this area are all approximately equal.

Preferably, the image capture device is used to detect human skin as in the first embodiment, based on a spectral curve having:

- A broad peak centered around 520 nm
- A broad dip between 540 and 580 nm
- A narrow peak at 555 nm
- A sharp rise between 580 and 620 nm
- A plateau between 620 and 700 nm, which is about twice as high as the peak around 520 nm.

Optionally, in complement to the n arrays of light sensor elements and the n corresponding filtered illumination beams, other arrays of light sensor elements and corresponding filtered illumination beams are added such as to output R, G and B images from the light sensor elements of this complementary arrays and to get, from the processing unit, usual RGB images of the scene.

Optionally, in complement to the n arrays of light sensor elements and the n corresponding filtered imaging beams, at least another set of n' arrays of light sensor elements and a corresponding other set of n' corresponding filtered imaging beams resulting from the filtering of the main imaging beam through spectral transmittances $r'_1(\lambda)$,

$r'_2(\lambda),..., r'_{i'}(\lambda),..., r'_{n'}(\lambda)$ defining 1, 2, ..., i', ..., n' color channels are added such as to detect another material b having another spectral reflectance $b(\lambda)$, wherein the different spectral distributions factors are defined according to the at least two requirements already mentioned in reference to the first embodiment. This variant allows a single image capture device to detect a plurality of different materials in areas of a scene captured by this device.

Material detection in areas of a scene is a key application of the image capture devices and methods according to the invention, and a key advantage is that such a detection does not require computer processing as in the prior art. In other words, computer processing resources are replaced by a specific optical design based on a specific definition of color channels. Skin areas detection can notably be performed, for instance for gesture recognition, therefore allowing the control of electronic devices by specific gestures. This invention then presents an **optical method** for reducing the computational requirements to achieve material detection. In case of skin detection, it allows to simplify gesture control, requiring fewer computational resources. In addition, material detection may be more robust as a consequence of using dedicated filters, leading to fewer false positives and false negatives.

Although the illustrative embodiments of the invention have been described herein with reference to the accompanying drawings, it is to be understood that the present invention is not limited to those precise embodiments, and that various changes and modifications may be effected therein by one of ordinary skill in the pertinent art without departing from the invention. All such changes and modifications are intended to be included within the scope of the present invention as set forth in the appended claims.

## Claims

1. A device for capturing a pixelated image of a scene illuminated under a spectral illumination $l(\lambda)$, comprising:

   - at least one array of light sensor elements distributed over a pixelated active surface, each light sensor element being configured to output a color value representative of its irradiance $E_i$,
   - an optical unit configured to image said illuminated scene on the pixelated active surface of each of the at least one array of light sensor elements and to filter the irradiance of each light sensor element through a spectral transmittance $r_i(\lambda)$ defining one i of a plurality of at least $n \geq 2$ color channels for each pixel of said pixelated image,
   - a processing unit configured to obtain, for each pixel of said pixelated image and for each color channel i of said plurality of n color channels, a color value output by at least one a light sensor element on which said pixel is imaged, thereby providing said pixelated image,

   wherein the spectral transmittance $r_i(\lambda)$ defining each color channel i meets at least the following two conditions:

   $$\int_{\lambda=\lambda_{min}}^{\lambda=\lambda_{max}} r_i(\lambda)\, l(\lambda)\, d\lambda \approx \frac{1}{n} \int_{\lambda=\lambda_{min}}^{\lambda=\lambda_{max}} \frac{1}{a(\lambda)}\, d\lambda \qquad \forall i \in [1,n]$$

   and

   $$\sum_{i=1}^{n} r_i(\lambda)\, l(\lambda) \approx \frac{1}{a(\lambda)} \qquad \forall\, \lambda \in [\lambda_{min}, \lambda_{max}]$$

   wherein the spectral transmittances $r_1(\lambda)$, $r_2(\lambda),..., r_i(\lambda),..., r_n(\lambda)$ of the n color channels are different, one from any other one,
   where $a(\lambda)$ is the spectral reflectance of a specific material a in a detection spectral range $[\lambda_{min}, \lambda_{max}]$,
   where said spectral illumination $l(\lambda)$ and said spectral transmittances $r_i(\lambda)$ $i \in [1,n]$ are defined at least in said detection spectral range $[\lambda_{min}, \lambda_{max}]$.

2. The device of claim 1, wherein the different spectral transmittances $r_1(\lambda)$, $r_2(\lambda),..., r_i(\lambda),..., r_n(\lambda)$ of the n color channels overlap at least partially over said spectral range $[\lambda_{min}, \lambda_{max}]$.

3. The device of claim 1 or 2, where said processing unit is further configured to detect in the pixelated image of the scene pixels having approximately equal color values over the n color channels.

4. The device of any one of claims 1 to 3, wherein said material is human skin and wherein said spectral reflectance $a(\lambda)$ is described by a spectral curve **characterized by**:

> • A broad peak centered around 520 nm
> • A broad dip between 540 and 580 nm
> • A narrow peak at 555 nm
> • A sharp rise between 580 and 620 nm
> • A plateau between 620 and 700 nm, which is about twice as high as the peak around 520 nm.

5. The device of any one of claims 1 to 4 comprising only one array of light sensor elements, wherein said optical unit comprises an array of color filter elements configured such that each light sensor element i has a color filter element on it having the spectral transmittance $r_i(\lambda)$ defining one of said color channels.

6. The device of any one of claims 1 to 4 comprising one array of light sensor elements for each color channel, wherein said optical unit comprises an illumination beam splitter configured to split a main imaging beam into n different filtered imaging beams directed to the pixelated active surface of an array of light sensor element such that each filtered imaging beam results from the filtering of the main imaging beam through a spectral transmittance $r_i(\lambda)$ defining a color channel *i*.

7. A method for capturing a pixelated image of a scene illuminated under a spectral illumination $l(\lambda)$ comprising:

> - imaging said scene on a pixelated active surface of at least one array of light sensor elements distributed over said pixelated active surface, each light sensor element being configured to output a color value representative of its irradiance $E_i$,
> - filtering the irradiance of each light sensor element through a spectral transmittance $r_i(\lambda)$ defining one i of a plurality of at least n ≥ 2 color channels,
> - obtaining, for each pixel of said pixelated image and for each color channel i of said plurality of n color channels, a color value output by at least one light sensor element on which said pixel is imaged, thereby providing said pixelated image,

wherein the spectral transmittance $r_i(\lambda)$ defining each color channel i meets at least the following two conditions:

$$\int_{\lambda=\lambda_{min}}^{\lambda=\lambda_{max}} r_i(\lambda)\, l(\lambda)\, d\lambda \approx \frac{1}{n} \int_{\lambda=\lambda_{min}}^{\lambda=\lambda_{max}} \frac{1}{a(\lambda)}\, d\lambda \qquad \forall i \in [1, n]$$

and

$$\sum_{i=1}^{n} r_i(\lambda)\, l(\lambda) \approx \frac{1}{a(\lambda)} \qquad \forall\, \lambda \in [\lambda_{min}, \lambda_{max}]$$

wherein the spectral transmittances $r_1(\lambda)$, $r_2(\lambda)$,..., $r_i(\lambda)$,..., $r_n(\lambda)$ of the n color channels are different, one from any other one,
where $a(\lambda)$ is the spectral reflectance of a specific material a in a detection spectral range $[\lambda_{min}, \lambda_{max}]$,
where said spectral illumination $l(\lambda)$ and said spectral transmittances $r_i(\lambda)$ i ∈ [1,n] are defined at least in said detection spectral range $[\lambda_{min}, \lambda_{max}]$.

8. The method of claim 7 further comprising:

> - detecting in the obtained pixelated image of the scene pixels having approximately equal color values over the n color channels.

9. A method of gesture recognition in a scene illuminated under a spectral illumination $l(\lambda)$ comprising capturing a pixelated image of said scene according to the method of claim 7, wherein said specific material is human skin, further comprising detecting in the pixelated image of the scene pixels having approximately equal color values over the n color channels and recognizing gesture based on detected pixels.

# Fig.1

Skin Reflectance

Europäisches
Patentamt

European
Patent Office

Office européen
des brevets

## EUROPEAN SEARCH REPORT

Application Number

EP 18 30 5204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/089263 A1 (FRIEDHOFF RICHARD MARK [US] ET AL) 11 April 2013 (2013-04-11) * paragraphs [0042], [0085] - [0087]; figures 1,5 * ----- | 1-3,5-8 | INV. G01J3/46 G06T7/10 G01J3/12 |
| A | US 2014/168421 A1 (XU BEILEI [US] ET AL) 19 June 2014 (2014-06-19) * figures 1-4 * ----- | 1-9 | |
| A | US 9 372 118 B1 (TAPLIN LAWRENCE A [US] ET AL) 21 June 2016 (2016-06-21) * columns 4-6; figures 1-3 * ----- | 1-9 | |

TECHNICAL FIELDS
SEARCHED        (IPC)

G01J
G06T

The present search report has been drawn up for all claims

| Place of search | Date of completion of the search | Examiner |
|---|---|---|
| Munich | 24 September 2018 | Hambach, Dirk |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 30 5204

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2018

| Patent document cited in search report | | | Publication date | Patent family member(s) | | | Publication date |
|---|---|---|---|---|---|---|---|
| US 2013089263 | A1 | | 11-04-2013 | BR | 112014008825 | A2 | 25-04-2017 |
| | | | | CA | 2851498 | A1 | 18-04-2013 |
| | | | | CN | 103917990 | A | 09-07-2014 |
| | | | | EP | 2766853 | A1 | 20-08-2014 |
| | | | | JP | 2014534699 | A | 18-12-2014 |
| | | | | KR | 20140058674 | A | 14-05-2014 |
| | | | | RU | 2014118769 | A | 20-11-2015 |
| | | | | US | 2013089263 | A1 | 11-04-2013 |
| | | | | US | 2014219574 | A1 | 07-08-2014 |
| | | | | WO | 2013055556 | A1 | 18-04-2013 |
| US 2014168421 | A1 | | 19-06-2014 | NONE | | | |
| US 9372118 | B1 | | 21-06-2016 | NONE | | | |

EPO FORM P0459

For more details about this annex : see Official Journal of the European Patent Office, No. 12/82

**EP 3 531 092 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170089761 A

- US 20170303790 A

**Non-patent literature cited in the description**

- **ANGELOPOULOU, E.** The reflectance spectrum of human skin. University of Pensylvania, 1999, 1